# EUROPÄISCHE PATENTSCHRIFT

(11) **EP 0 589 206 B1**
(45) Veröffentlichungstag und Bekanntmachung des Hinweises auf die Patenterteilung: **28.02.1996**
(21) Anmeldenummer: 93113232.8
(22) Anmeldetag: 18.08.1993
(51) Int. Cl.: F16D 65/16, F16D 55/226

(54) **Betätigungsvorrichtung für eine Gleitsattel-Scheibenbremse**
Actuator device for a sliding caliper disc brake
Dispositif d'actionnement pour un frein à disque à étrier coulissant

(30) Priorität: 21.09.1992 DE 4231560
(43) Veröffentlichungstag der Anmeldung: 30.03.1994
(73) Patentinhaber: DEUTSCHE PERROT-BREMSE GmbH, D-68229 Mannheim (DE)
(72) Erfinder: Antony, Paul, Dipl.-Ing., D-67550 Worms (DE); Jäger, Hellmut, Dipl.-Ing., D-68535 Edingen-Neckarhausen (DE); Macke, Wlodzimierz, Dipl.-Ing., D-68519 Viernheim (DE); Rupprecht, Bernd, D-68535 Edingen-Neckarhausen (DE)
(74) Vertreter: Patentanwälte Leinweber & Zimmermann

(56) Entgegenhaltungen:
- EP-A- 0 291 071
- DE-A- 3 213 356
- DE-A- 3 411 745
- DE-A- 3 423 875
- DE-A- 4 032 885
- DE-C- 2 614 321
- DE-C- 2 649 666
- US-A- 3 830 343
- US-A- 4 966 256

## Beschreibung

Die Erfindung bezieht sich auf eine Betätigungsvorrichtung für eine Gleitsattel-Scheibenbremse mit einem Bremssattel, einer mit einem Bremshebel verbundenen Zuspannwelle, die zwischen der einen Seite der Bremsscheibe und dem Bremssattel oder einem mit diesem fest verbundenen Element sich mit ihrer Achse quer zur Bremsscheibenachse erstreckend angeordnet und mit einem etwa halbzylindrischen ersten Wellenbereich über erste Teilrollenlager in bezug auf den Bremssattel bzw. das mit ihm verbundene Element abgestützt und relativ zu ihm durch Verschwenken des Bremshebels drehbar ist und auf ihrer der Bremsscheibe zugewandten, dem halbzylindrischen ersten Wellenbereich gegenüberliegenden Seite einen Vorsprung aufweist, der über zweite Teil-Rollenlager und vorgeschaltete Rollelemente mit einem der Beaufschlagung der Bremsscheibe dienenden Druckstück zusammenwirkt.

Bei einer bekannten Ausführung dieser Art (EP 02 91 071 B1) ist der Vorsprung durch einen Exzenter der Zuspannwelle gebildet, der an einem Rollelement in Form einer sich parallel zur Bremsscheibenebene erstreckenden, der Vermeidung von Verspannungen und der Verringerung der Gleitreibung dienenden Rollplatte anliegt. Diese stützt sich selbst über Rollenlager am Druckstück ab. Bei Bremsbetätigung nimmt der Exzenter die Rollplatte entgegen der Wirkung einer Rückstellfeder mit. Die gewünschte Wirkung der Rollplatte ist bei Ausfall der Feder nicht mehr gegeben, wenn bei Bremsentlastung keine Rückführung der Rollplatte mehr erfolgt. Die Rollplatte verbleibt dann in der radial inneren Position, und eine anschließende Bremsbetätigung führt zu großen Gleitreibungen zwischen dem Exzenter und der feststehenden Rollplatte. Bei der erwähnten Bremsbetätigung verändert sich andererseits die Position der Berührungslinie des Exzenters in bezug auf die Mittelachse des Druckstücks laufend. Diese Exzentrizität führt zu größeren Reibungsbeanspruchungen im Bereich der Druckstückführung im Bremssattel. Nachteilig in baulicher Hinsicht ist ferner die relativ große radiale Ausdehnung der Rollplatte, wenn sie hohen Belastungen standhalten soll, da deren Ausdehnung von der entsprechend größeren Anzahl der abzudeckenden Wälzkörper abhängt.

Um diesen ungünstigen Reibungsverhältnissen zu begegnen, ist es ferner bereits bekannt (DE 40 32 885 A1), das Druckstück und die Zuspannwelle über eine als zur Drehachse der Zuspannwelle parallele Drehlagerung ausgebildete exzentrische Wälzlager-Lagerungsvorrichtung miteinander zu koppeln. Die Reibungsverhältnisse sind dadurch zwar günstiger. Ganz abgesehen von einem größeren Platzbedarf ist jedoch in funktioneller Hinsicht die Tatsache von Nachteil, daß die Wälzlager-Lagerungsvorrichtung bei Betätigung des Bremshebels eine Kreisbahn beschreibt, so daß bezüglich der Auswirkungen der auftretenden Kräfte schwer zu kalkulierende Kippbewegungen des Druckstücks in Kauf genommen werden müssen, die zu einer ungleichmäßigen Bremsbelagbeaufschlagung und damit einem Radialverschleiß und schließlich bei Vollbremsungen zu übermäßigen Flächenbeanspruchungen führen. Durch die Lagerung des Druckstückes im Bremssattel über einen rohrförmigen Ansatz mit radialem Spiel kann sich das Druckstück beim Bremsvorgang durch die Umfangskräfte leicht um die Bremsenachse drehen, wodurch infolge der Querkräfte nachteilig Lagerbelastungen an der Exzenter-Lagerung auftreten.

Der Vollständigkeit halber sei erwähnt, daß aus der DE 34 11 745 A1 eine Exzenterzuspannung mittels eines Druckstößels bekannt ist, die sich allerdings nur für Feststellbremsen eignet, und aus der DE 26 14 321 C2 der Einsatz einer die Reibung vermindernden Kugel, wobei sich eine instabile, mit hohen Gleitreibungen verbundene Ausführung ergibt. Die DE 32 13 356 A1 und die DE 34 23 875 A1 zeigen vorbekannte Exzenterzuspannungen mit Gleitlagerungen, die im Bremssattel pendelnd angeordnete Druckstücke umfassen. Durch diese Pendelbewegungen ergibt sich in nachteiliger Weise eine ungleichmäßige radiale Anlage des Bremsbelages und ein unerwünschter Radialverschleiß am betätigungsseitigen Bremsbelag. Aus der US PS 38 30 343 ist ferner eine Betätigungsvorrichtung bekannt, bei der ein drehbar gelagerter, von einer Kolbenzylinder-Einheit beaufschlagbarer Nocken mit einer evolventenförmigen Kontur auf eine Rollplatte wirkt, die am Belagträger federnd gehalten ist. Bei einem Ausfall der Halterung kann in nachteiliger Weise der gleiche Effekt auftreten, wie er vorstehend in Verbindung mit der Ausführung nach der EP 02 91 971 B1 bereits beschrieben wurde. Desweiteren wird der evolventenförmige Nocken mit zunehmendem Belagverschleiß mittels einer Einwegkupplung soweit herausgeschwenkt, daß folglich ein großer radialer Einbauraum benötigt wird. Dieser Nachteil ist auch für die Scheibenbremse nach der DE 26 49 666 C2 festzustellen.

Der Erfindung liegt die Aufgabe zugrunde, die Betätigungsvorrichtung der eingangs genannten Art so weiter auszubilden, daß eine baulich relativ wenig Platz beanspruchende einfache Ausführung erreicht ist, bei der vom Beginn bis zum Ende der Krafteinleitung der Kraftfluß konstant linear durch die Mittelebene der Bremse bis in den Bremsbelag verläuft und Reibungsverluste weitgehend reduziert sind.

Die Betätigungsvorrichtung nach der Erfindung, bei der diese Aufgabe gelöst ist, ist im wesentlichen dadurch gekennzeichnet, daß der Vorsprung der Zuspannwelle auf ihrer der Bremsscheibe zugewandten Seite mit einem Profil in Form einer Evolvente versehen ist, deren Schwenkradien im Sinne einer Wegzunahme bei jedem Bremsvorgang konstant sind, daß die Achse der Zuspannwelle in bezug auf die Mittelebene des Druckstücks derart seitlich versetzt angeordnet ist, daß die Berührungslinie des evolventenförmigen Wellenvorsprungs der Zuspannwelle mit den Rollelementen beim Aus- und Einschwenken der Zuspannwelle konstant in der Mittelebene liegt, daß der Radius der Rollelemente größer als der größte Wirkradius des evolventenförmigen Profils des Vorsprungs ist, und daß zwischen jedem schalenförmig ausgebildeten Rollelement und dem Wellenvorsprung eine formschlüssige Verbindung vorgesehen ist.

Diese Betätigungsvorrichtung sichert nicht nur auf der dem Bremssattel zugewandten Seite eine reibungsarme Abstützung; diese ist auch auf der der Bremsscheibe zugewandten Seite gewährleistet. Die formschlüssige Verbindung von Rollelement und Wellenvorsprung ermöglicht eine sichere, reibungsarme Funktionsweise trotz optimal kurzer Rollelement-Ausführung. Zu dieser kurzen Kompaktbauweise trägt auch die schalenförmige Ausbildung der Rollelemente bei. Da das Druckstück von der Zuspannwelle aus über die Rollelemente ausschließlich in seiner Mittelebene beaufschlagt wird, die sich in der Ebene der Bremsenachse und symmetrisch zu den seitlichen Druckstückführungsflächen des Bremssattels erstreckt, sind nur minimale Reibungsverluste im Bereich dieser Führungsflächen gegeben; die Nachteile, die sich bei herkömmlichen Betätigungsvorrichtungen mit Krafteinleitung in wechselnden Richtungen infolge von Druckstück-Kipp- und -Drehbewegungen ergeben, sind somit ausgeschaltet.

Als besonders zweckmäßig hat es sich in weiterer Ausgestaltung der Betätigungsvorrichtung erwiesen, wenn die formschlüssige Verbindung zwischen den beiden durch das Rollelement einerseits und den evolventenförmigen Wellenvorsprung andererseits gebildeten Teilen durch einen mit dem einen Teil verbundenen, von ihm vorstehenden Stift gebildet ist, der in eine im anderen Teil vorgesehene Öffnung mit Spiel eingreift.

Stattdessen oder zusätzlich ist es auch möglich, die formschlüssige Verbindung zwischen dem Rollelement und dem Wellenvorsprung durch eine dem einen stirnseitigen Ende des Rollelements vorgelagerte Auskragung an der Zuspannwelle und durch eine am anderen stirnseitigen Ende des Rollelements vorgesehene Ausnehmung zu bilden, in die der von der Zuspannwelle ausgehende Bremshebel eingreift.

Weitere Einzelheiten, Vorteile und Merkmale ergeben sich aus der folgenden Beschreibung anhand der beigefügten Zeichnung, auf die bezüglich aller wesentlichen, nicht im einzelnen abgehandelten bedeutsamen Details ausdrücklich Bezug genommen wird. Es zeigen:
- Fig. 1: einen Schnitt quer zur Bremsscheibenebene,
- Fig. 2: einen Schnitt in der Ebene der Achse A gemäß Fig. 1,
- Fig. 3: einen Schnitt parallel zur Bremsscheibenebene,
- Fig. 4: eine perspektivische Ansicht eines schalenförmigen Rollelments zur Veranschaulichung einer wesentlichen Einzelheit und
- Fig. 5: und 5a bzw. 6 und 6a schematische Schnittdarstellungen quer zur Bremsscheibenebene, in größerem Maßstab, zur Veranschaulichung von Funktionsstellungen bei Einsatz unterschiedlicher Rollelemente.

### Aufbau:

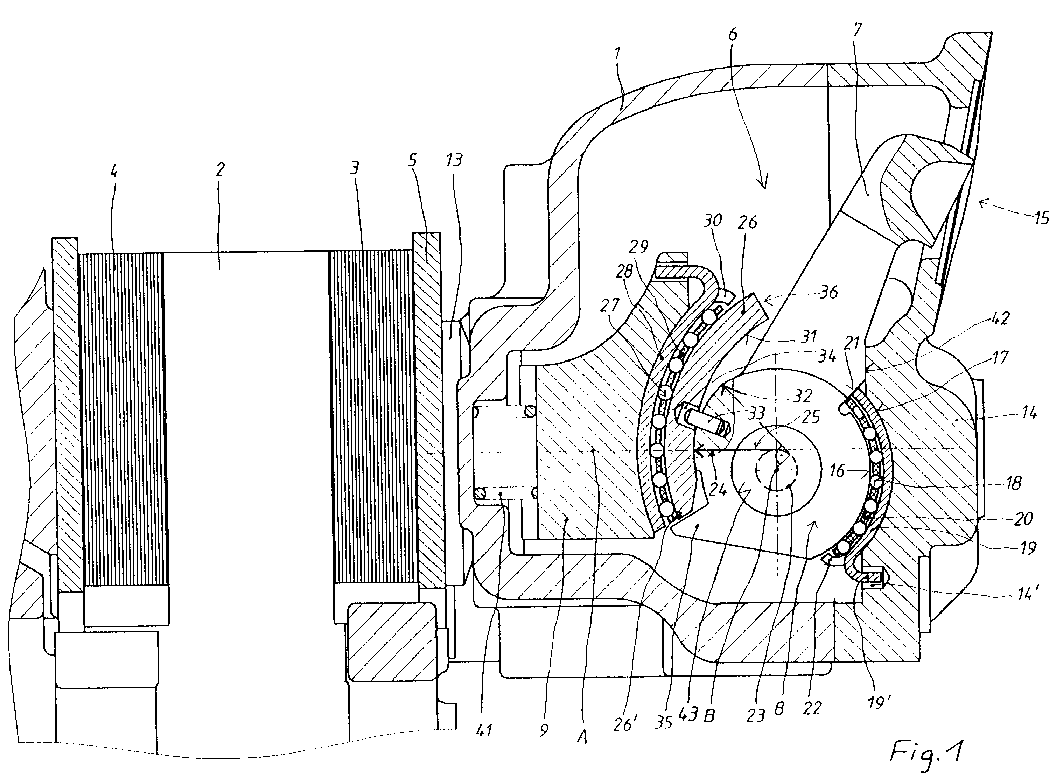

Nach Fig. 1 weist die Scheibenbremse einen Bremssattel 1 auf, der in üblicher Weise mit seinen beiden Schenkeln eine Bremsscheibe 2 übergreift. Beidseitig der Bremsscheibe sind Bremsbeläge 3, 4 an Belagträgern 5 in einem nicht dargestellten Bremsenträger bzw. im Bremssattel 1 geführt und abgestützt. In nicht dargestellter Weise ist der Bremssattel 1 mit Hilfe von Führungselementen quer zur Bremsscheibe verschieblich gelagert. Der Bremssattel 1 weist einseitig eine Betätigungsvorrichtung 6 zur Beaufschlagung der Bremse auf.

Die Betätigungsvorrichtung 6 besteht im wesentlichen aus einem Bremshebel 7, der mit einer parallel zur Bremsscheibenebene angeordneten Zuspannwelle 8 verbunden ist, und einem im Bremssattel 1 geführten und abgestützten Druckstück 9, in das beidseitig in der Ebene der Bremsenachse A der Bremsvorrichtung 6 zwei Druckspindeln 10, 11 eingeschraubt sind. Zur Bremsscheibe 2 weisend sind in die Druckspindeln jeweils ein Druckstempel 12, 13 eingesteckt.

Am Bremssattel 1 ist ein Deckel 14 festgelegt, an dem ein Bremszylinder 15 befestigt ist. Der Bremshebel 7 stellt die Verbindung zwischen dem Bremszylinder 15 bzw. dem nicht dargestellten Bremsgestänge und der Zuspannwelle 8 her. Die Zuspannwelle 8 weist eine speziell ausgeformte Außenkontur um ihre drehneutrale Achse B auf. Zum mit dem Bremssattel 1 verbundenen Deckel 14 erstreckt sich parallel um die Achse B ein annähernd halbzylindrischer Wellenbereich 16, der in eine koaxial angeordnete, annähernd innenzylindrische Fläche 17 des Deckels 14 über erste Teil-Rollenlager 18 mit Lagerschalen 19 eingreift. Dabei ist jede Lagerschale 19 am Deckel 14 durch Eingriff eines abgewinkelten Endes 19' in eine Bohrung 14' gehaltert. Der Käfig 20 ist an einem auskragenden Anschlag 21 der Zuspannwelle 8 und mit einem Anschlag 22 an der Lagerschale 19 in bezug auf letztere positioniert. Weitere Befestigungsarten zur Lagerung sind im Rahmen technischer Lösungen möglich.

Zur Seite der Bremsscheibe 2 hingegen ist die Zuspannwelle 8 mit einem Vorsprung 24 versehen, der ein Profil in Form einer durch Abwicklung eines Kreises 23 gebildeten Evolvente aufweist. Der Kreisdurchmesser um die drehneutrale Achse B ist so gewählt, daß die an den Kreis gelegte Tangente 25 in der Ebene der Bremsenachse A liegt. Somit liegen bei einer Verdrehung der Zuspannwelle 8 die zunehmenden Radien der Evolvente immer konstant linienförmig über die axiale Erstreckung der Evolvente in der Ebene der Bremsenachse A an dem Gegenstück an.

Das Gegenstück wird durch ein Rollelement 26 in Form einer Schale gebildet, welche einerseits linienförmig in der Ebene der Bremsenachse A am evolventenförmigen Vorsprung 24 und andererseits über koaxiale Teil-Rollenlager 27 oder dergleichen am Druckstück 9 anliegt.

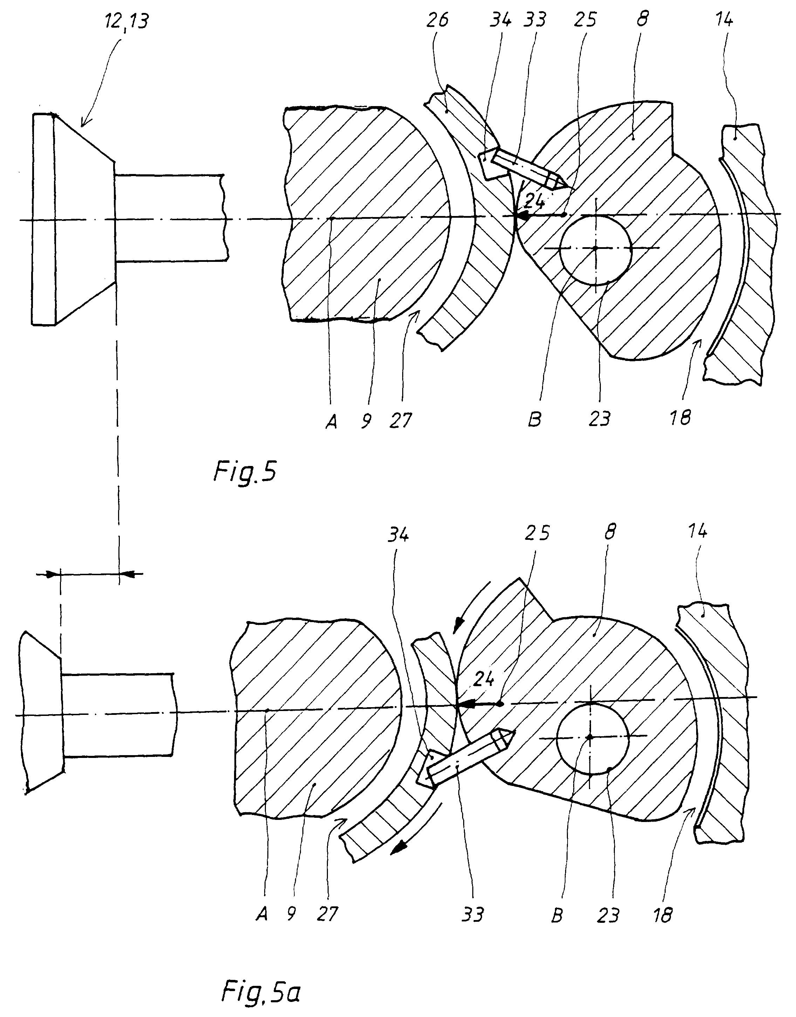

Die Krümmung der Rollelemente 26 kann gemäß einer ersten Ausführung entsprechend Fig. 5 und 5a entgegengesetzt der Krümmung des evolventenförmigen Vorsprungs 24 verlaufen. Dabei ist die in diesen Figuren nicht dargestellte Lagerschale 28 über eine Abwinkelung am Druckstück 9 befestigt, und der Rollen-Käfig 29 ist durch Anschläge zwischen dem Rollelement 26 und der Lagerschale 28 festgelegt, und zwar auf eine Weise, die der in Fig. 1 veranschaulichten prinzipiell entspricht.

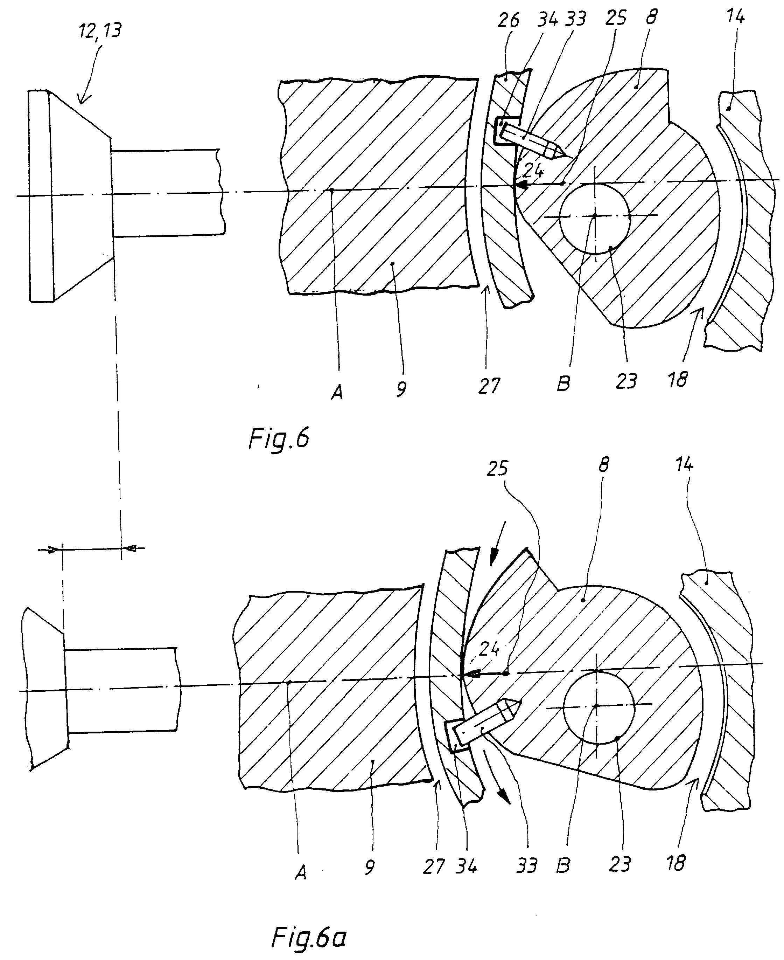

In einer günstigeren, raumsparenderen zweiten Ausführung entsprechend den Figuren 1 und 6 kann die Krümmung des Rollelements 26 auch um den evolventenförmigen Vorsprung 24 verlaufen. Bei dieser Ausführung ist der Radius 31 des Rollelements 26 größer als der größte vorhandene Radius 32 des evolventenförmigen Vorsprungs 24, so daß durch die größere Schmiegung ein Verklemmen verhindert wird. Auch hierbei wird der Käfig 29 durch einen Anschlag 26' an dem Rollelement 26 und einen Anschlag 30 an der Lagerschale 28 festgelegt. Weitere Befestigungsarten zur Lagerung sind im Rahmen technischer Lösungen möglich.

In beiden Ausführungen entsprechend den Figuren 5, 5a und 6, 6a wird das Rollelement 26 mittels eines Stiftes 33 gegenüber dem evolventenförmigen Vorsprung 24 formschlüssig gehalten und mitbewegt. Der Stift 33 ist auf jeden Fall in einem der beiden Teile in einer Öffnung ohne Spiel und in dem anderen der beiden Teile in einer Öffnung 34 mit radialem Spiel angeordnet, wobei das Spiel derart groß bemesessen ist, daß ein Verschwenken des Vorsprungs 24 gegenüber dem Rollelement 26 möglich ist. Die erfindungsgemäße Positionierung des Stiftes 33 gegenüber der Ebene der Bremsenachse A ist in der nachfolgenden Funktionsbeschreibung erwähnt.

Als weitere günstigere Möglichkeit, das schalenförmige Rollelement 26 entsprechend Fig. 4 relativ zum evolventenförmigen Vorsprung 24 zu positionieren, besteht darin, den unteren Bereich der Zuspannwelle 8 mit einer Auskragung 35 zu versehen, gegen die sich das schalenförmige Rollelement 26 einerseits abstützt. Andererseits weist dieses Rollelement 26 eine Ausnehmung 36 auf, in die der Bremshebel 7 eingreift. Damit ist das Rollelement 26 auch gegen eine axiale Verschiebung gesichert. Bei dieser Anordnung kann sich der Käfig 29 auch an dieser Auskragung 35 abstützen.

Weitere formschlüssige Verbindungen sind im Rahmen der technischen Möglichkeiten realisierbar.

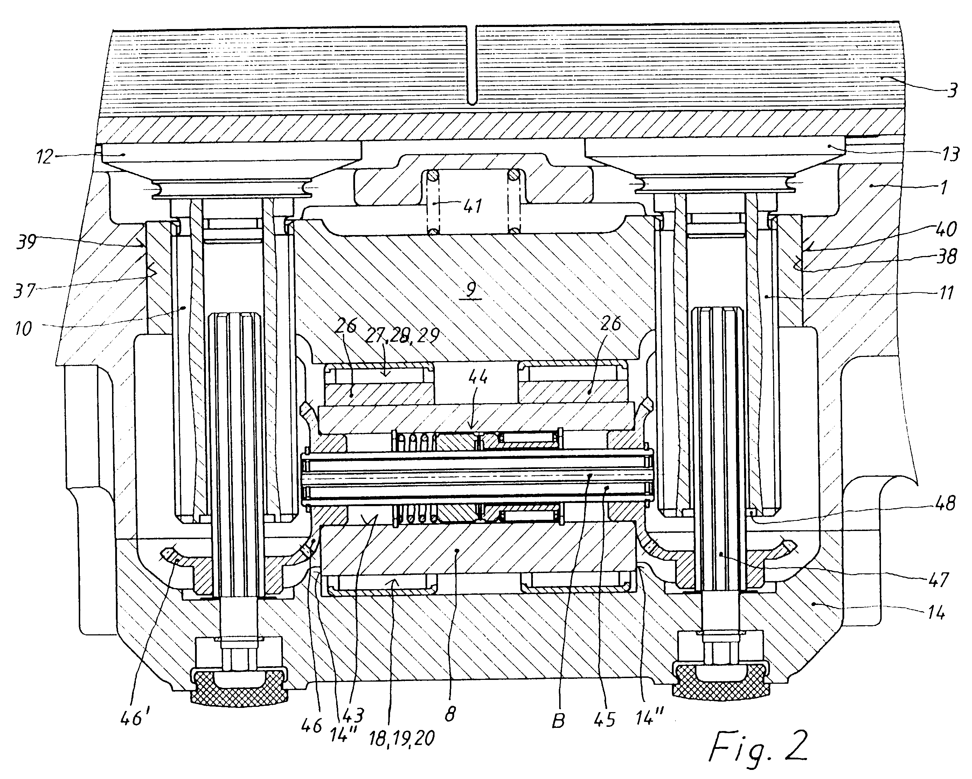

Die Lagerungen 18, 27 sowie die Schale 26 können über die Breite der Zuspannwelle durchgängig oder - wie zum Beispiel in Fig. 2 veranschaulicht - mehrteilig sein. Dementsprechend sind auch deren Halterungen ausgelegt.

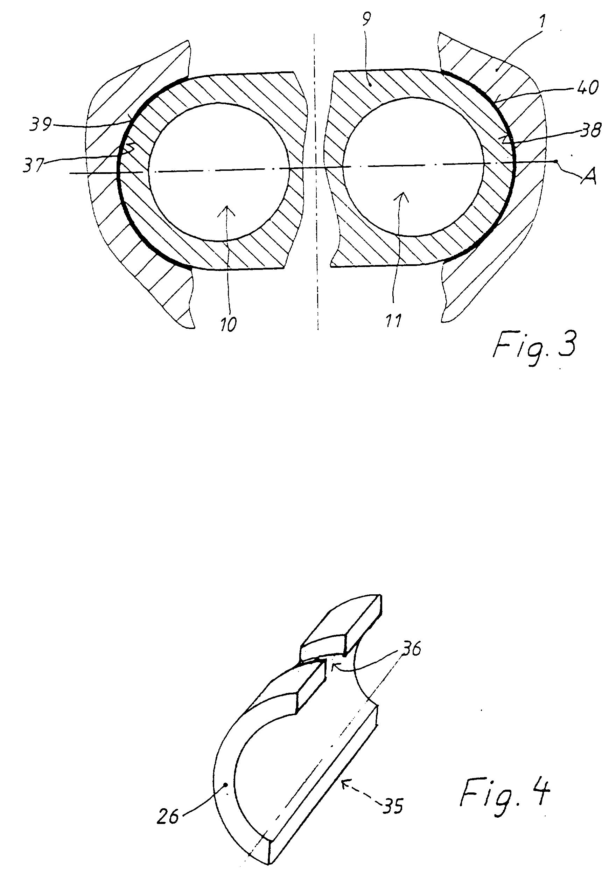

Das Druckstück 9 weist entsprechend Fig. 3 beidseitig der Druckspindellagerungen 10, 11 symmetrisch um die Ebene der Bremsenachse A annähernd halbzylindrische Ansätze 37 auf, die in annähernd innenzylindrische Führungen 39 des Bremssattels 1 eingreifen. Dadurch ist das Druckstück 9 sowohl in radialer als auch in seitlicher Richtung im Bremssattel 1 geführt und abgestützt. Eine zwischen dem Bremssattel 1 und dem Druckstück 9 vorgespannt angeordnete Druckfeder 41 hält die Bremsenteile gegeneinander. Dabei stützt sich der Bremshebel 7 gemäß Figur 1 an einem Anschlag 42 des Bremssattels 1 oder des Deckels 14 ab. Entsprechend Fig. 2 ist die Profilwelle 8 erfindungsgemäß in ihrer axialen Richtung zwischen seitlichen Anschlägen 14'' des Deckels 14 positioniert.

Nach Fig. 2 ist die Profilwelle 8 mit einer Durchgangsöffnung 43 in der drehneutralen Achse B versehen, die dazu geeignet ist, raumsparend eine kraftabhängige Nachstellvorrichtung 44 zur Steuerung einer gleichmäßigen Nachstellung der Druckstempel 12, 13 aufzunehmen. Diese Nachstellvorrichtung 44 ist direkt mit der Zuspannwelle 8 gekoppelt. Eine die Durchgangsöffnung 43 durchsetzende Nachstellwelle 45 ist mit der Nachstellvorrichtung 44 verbunden. Auf den Enden der Nachstellwelle 45 ist jeweils ein Teil 46 eines Winkeltriebs befestigt. Der jeweils andere Teil 46' sitzt auf einer Keilwelle 47, die sich ihrerseits in die zugehörige Druckspindel 10, 11 erstreckt und mit dieser über eine an letzterer befestigte Formscheibe 48 drehbeweglich und axial verschiebbar in Wirkverbindung steht.

Der detaillierte Aufbau der Nachstellvorrichtung und deren Funktionsweise ist Gegenstand der früheren Patentanmeldung P 42 15 200.3 und ist dieser zu entnehmen.

### Funktion:

Die Figuren 1, 2, 5 und 6 zeigen die Scheibenbremse bei Bremsentlastung, bei der sich der Bremshebel 7 am Anschlag 42 abstützt und die Teil-Rollenlager 18, 27 mit ihren Käfigen 20, 29 durch die zugeordneten Anschläge bzw. Auskragungen gegen Verschieben gesichert sind. Das Rollelement 26 wird mittels der Halte- und Mitnahmeteile in Form des Stiftes 33 und der Öffnung 34 bzw. der Auskragung 35 und der Ausnehmung 36 ebenfalls gegenüber dem evolventenförmigen Vorsprung 24 festgelegt. Dabei liegt der Vorsprung 24 linienförmig in der Ebene der Bremsenachse A mit ihrem annähernd geringsten Radius an dem gekrümmten Rollelement 26 an.

Die beiden Druckspindeln 10, 11 mit den Druckstempeln 12, 13 sind in einer solchen Länge in das Druckstück eingeschraubt, daß zwischen den Bremsbelägen 3, 4 und der Bremsscheibe 2 das erforderliche Lüftspiel vorhanden ist. Die innenliegenden Teile sind durch die Druckfeder 41 gegeneinander verspannt.

Wird der Bremshebel 7 bei einer Betätigung in Richtung Bremsscheibe gedrückt, so hebt er vom Anschlag 42 ab. Dabei dreht sich der evolventenförmige Vorsprung 24 aus der Ruhelage heraus, und der Anschlag 21 für den Käfig 20 entfernt sich von letzterem. Dabei hebt sich auch der Käfig 20 vom Anschlag 22 ab. Durch die Vergrößerung der Evolventenradien als Wegzunahme in Richtung Bremsscheibe 2 wird bei gleichbleibender konstanter Linienanlage in der Ebene der Bremsenachse A das schalenförmige Rollelement 26 radial einwärts mitgenommen und das Druckstück 9 gleichzeitig axial in Richtung Bremsscheibe 2 verschoben.

Dabei nimmt die Schmiegung im oberen Evolventenbereich zwischen den Radien 31, 32 zunehmend ab, und das Rollelement 26 bewegt sich auf dem Teil-Rollenlager 27 abwärts. Das Rollelement 26 ist dabei durch die anfangs beschriebenen formschlüssigen Mitnahmeteile 33, 34 bzw. 35, 36 gegenüber dem evolventenförmigen Vorsprung 24 festgelegt; die Öffnung 34 für den Stift 33 ist dabei derart groß, daß ein Verklemmen beim Abwälzvorgang ausgeschlossen ist. Durch geeignete Wahl der Position des Stiftes 33 gegenüber der Ebene der Bremsenachse A wird der Stift 33 bei Bremsbetätigung annähernd symmetrisch um A mitverschwenkt.

Wie sich aus Fig. 6 ergibt, liegt der Stift 33 dabei in der Ruhelage unter einer leichten Winkelstellung annähernd an der radial oberen Fläche der Öffnung 34 an, von der er sich bei Bremsbetätigung entfernt. Dabei bewegt sich der Käfig 29 ebenfalls vom Anschlag 30 weg. Bei Bremsentlastung greift der Stift 33 wieder annähernd an der radial oberen Fläche der Öffnung 34 an und legt das schalenförmige Rollelement 26 in der Ruhelage fest.

Fig. 5 zeigt, daß die Winkelstellung des Stiftes 33 gegenüber der Öffnung 34 zwischen der Ruhe- und Betätigungslage entgegengesetzt ist.

Bei Betätigung der Bremse gleitet das Druckstück 9 gegen die Vorspannkraft der Druckfeder 41 mit seinen annähernd halbzylindrischen Ansätzen 37, 38 in den annähernd innenzylindrischen Führungen 39, 40 des Bremssattels 1 axial in Richtung Bremsscheibe 2. Die im Druckstück 9 eingeschraubten Druckspindeln 10, 11 mit den Druckstempeln 12, 13 werden mitverschoben, um letztendlich den Bremsbelag 3 gegen die Bremsscheibe 2 zu drücken. In bekannter Weise wird dann über die Reaktionskraft der gegenüberliegende Bremsbelag 4 durch den Bremssattel 1 gegen die Bremsscheibe 2 gedrückt.

Mittels der erfindungsgemäßen allseitigen Abstützung des Druckstückes 9 werden Querkräfte von den Druckstempeln 12, 13, die sich aus der Umfangskraft beim Bremsen in Form einer Schrägstellung ergeben, vom Bremssattel 1 aufgenommen und nicht auf die Lagerungen der Betätigungsvorrichtung übertragen.

Da die Bremskraft als Linienanlage mittels eines evolventenförmigen Vorsprungs 24 ausgeübt wird, liegt der davon ausgehende Kraftfluß während der Verdrehung immer konstant in der Ebene der Bremsenachse A, so daß über die ebenfalls in dieser Ebene gelagerten Druckstempel 12, 13 der betätigungsseitige Bremsbelag 3 gleichmäßig gegen die Bremsscheibe 2 gedrückt wird. Dadurch wird der eingangs beschriebene Nachteil von pendelnden Exzenterbetätigungen, bei denen der Kraftfluß nicht konstant in der Ebene der Bremsenachse liegt, beseitigt.

Die Drehbewegung der Zuspannwelle 8 wird über die mit dieser gekoppelte Nachstellvorrichtung 44 und die Nachstellwelle 45 über die beidseitig angeordneten Winkeltriebe 46, 46' in Drehbewegungen der Keilwellen 47 umgesetzt. Letztere sind ihrerseits in den Druckspindeln 10, 11 integriert und mit diesen drehbeweglich im Sinne eines Herausschraubens zur Nachstellung eines Belagverschleißes gekoppelt.

Bei Bremsentlastung kehren alle Teile in ihre Ausgangsstellung zurück. Die Nachstellvorrichtung ist bei dieser Lösebewegung mittels einer Einwegkupplung ausgeschaltet.

## Patentansprüche

1. Betätigungsvorrichtung für eine Gleitsattel-Scheibenbremse mit einem Bremssattel (1), einer mit einem Bremshebel (7) verbundenen Zuspannwelle (8), die zwischen der einen Seite der Bremsscheibe (2) und dem Bremssattel oder einem mit diesem fest verbundenen Element (14) sich mit ihrer Achse quer zur Bremsscheibenachse erstreckend angeordnet und mit einem etwa halbzylindrischen ersten Wellenbereich (16) über erste Teil-Rollenlager (18, 19) in bezug auf den Bremssattel bzw. das mit ihm verbundene Element (14) abgestützt und relativ zu ihm durch Verschwenken des Bremshebels (7) drehbar ist und auf ihrer der Bremsscheibe (2) zugewandten, dem halbzylindrischen ersten Wellenbereich (16) gegenüberliegenden Seite einen Vorsprung (24) aufweist, der über zweite Teil-Rollenlager (27, 28, 29) und vorgeschaltete Rollelemente (26) mit einem der Beaufschlagung der Bremsscheibe (2) dienenden Druckstück (9) zusammenwirkt, dadurch gekennzeichnet,
daß der Vorsprung (24) der Zuspannwelle (8) auf ihrer der Bremsscheibe (2) zugewandten Seite mit einem Profil in Form einer Evolvente versehen ist, deren Schwenkradien im Sinne einer Wegzunahme bei jedem Bremsvorgang konstant sind,
daß die Achse (B) der Zuspannwelle (8) in bezug auf die Mittelebene (A) des Druckstücks (9) derart seitlich versetzt angeordnet ist, daß die Berührungslinie des evolventenförmigen Wellenvorsprungs (24) der Zuspannwelle (8) mit den Rollelementen (26) beim Aus- und Einschwenken der Zuspannwelle (8) konstant in der Mittelebene (A) liegt,
daß der Radius (31) der Rollelemente (26) größer als der größte Wirkradius (32) des evolventenförmigen Profils des Vorsprungs (24) ist, und
daß zwischen jedem schalenförmig ausgebildeten Rollelement (26) und dem Wellenvorsprung (24) eine formschlüssige Verbindung (33, 34, 35, 36) vorgesehen ist.

2. Betätigungsvorrichtung nach Anspruch 1, dadurch gekennzeichnet, daß die formschlüssige Verbindung zwischen den beiden durch das Rollelement (26) einerseits und dem evolventenförmigen Wellenvorsprung (24) andererseits gebildeten Teilen durch einen mit dem einen Teil (24) verbundenen, von ihm vorstehenden Stift (33) gebildet ist, der in eine im anderen Teil (26) vorgesehene Öffnung (34) mit Spiel eingreift.

3. Betätigungsvorrichtung nach Anspruch 1, dadurch gekennzeichnet, daß die formschlüssige Verbindung zwischen dem Rollelement (26) und dem Wellenvorsprung (24) durch eine dem einen stirnseitigen Ende des Rollelements (26) vorgelagerte Auskragung (35) an der Zuspannwelle (8) und durch eine am anderen stirnseitigen Ende des Rollelements vorgesehene Ausnehmung (36) gebildet ist, in die der von der Zuspannwelle (8) ausgehende Bremshebel (7) eingreift.

4. Betätigungsvorrichtung nach Anspruch 3, dadurch gekennzeichnet, daß das der Zuspannwelle (8) vorgelagerte Rollelement (26) und das dem Druckstück (9) zwischengelagerte zweite Teil-Rollenlager (27, 29) mit seinem Käfig (29) gemeinsam an der vorgelagerten Auskragung (35) der Zuspannwelle (8) festgelegt sind.

5. Betätigungsvorrichtung nach einem der Ansprüche 1 bis 4, dadurch gekennzeichnet, daß das zwischen dem halbzylindrischen Wellenbereich (16) der Zuspannwelle (8) und dem Deckel (14) des Bremssattels (1) eingeschaltete erste Teil-Rollenlager (18, 19) einerseits durch einen Anschlag (21) an der Zuspannwelle (8) und andererseits durch einen Anschlag (22) an der Lagerschale (19) in seiner Position festgelegt ist.

6. Betätigungsvorrichtung nach einem der Ansprüche 1 bis 5, dadurch gekennzeichnet, daß das zwischen dem der Zuspannwelle (8) vorgelagerten Rollelement (26) und dem Druckstück (9) zwischengeschaltete zweite Teil-Rollenlager (27, 29) mit seinem Käfig (29) in bezug auf das Rollelement (26) einerseits durch einen am Rollelement vorgesehenen ersten Anschlag (26') und andererseits durch einen Anschlag (30) an der Lagerschale (28) festgelegt ist.

7. Betätigungsvorrichtung nach einem der Ansprüche 1 bis 6, gekennzeichnet durch eine symmetrisch um die Bremsenachse (A) ausgeführte Lagerung (37, 38) für das Druckstück (9) im Bremssattel (39, 40).

8. Betätigungsvorrichtung nach einem der Ansprüche 1 bis 7, dadurch gekennzeichnet, daß das Druckstück (9) in bezug auf den Bremssattel (1) allseitig abgestützt ist.

9. Betätigungsvorrichtung nach Anspruch 8, dadurch gekennzeichnet, daß sich das Druckstück (9) im Bereich seiner halbzylindrischen Ansätze (37) in annähernd halbzylindrischen Führungen (39) des Bremssattels (1) abstützt.

10. Betätigungsvorrichtung nach einem der Ansprüche 1 bis 9, dadurch gekennzeichnet, daß die Zuspannwelle (8) in ihrer axialen Richtung zwischen seitlichen Anschlägen (14'') des Deckels (14) bzw. des Bremssattels (1) positioniert ist.

## Claims

1. Actuating mechanism for a floating caliper disc brake with one brake caliper (1) and a clamping shaft (8) connected to a brake lever (7), installed between brake disc (2) and brake caliper or fixed element (14), mounted transverse to the axis of a brake disc with an initial half-cylindrical shaft area (16), via the first roller bearings (18, 19), supporting the attached fixed element (14) rotating upon actuation of the brake lever (7) over the second roller bearing (27, 28, 29) and superposed roller elements (26), with a projection (24) interacting with the thrust piece (9) in the following manner,
that the projection (24) of the clamping shaft (8) on the brake disc side (2) is equipped with an involute profile, ensuring a constant turning radius during every braking cycle,
that the axis (B) of the clamping shaft (8), relative to the centre plane (A) of the thrust piece (9), is offset sideways so that the contact line on the involute profile projection (24) of the clamping shaft (8) with the roller element (26) lies constant in the centre plane (A),
that the radius (31) of the roller elements (26) is bigger than the largest effective radius of the involute profile projection (24) and
that positive contact (33, 34, 35) is made between each cup-shaped roller element (26) and the shaft projection (24).

2. Actuating mechanism according to claim 1, characterised by the positive coupling of roller element (26) and involute profile projection (24) as a result of a pin (33) protruding into a loose fitting opening (34), thereby locking the mating component (26) in place.

3. Actuating mechanism according to claim 1, characterised by the positive coupling of roller element (26) and shaft protrusion (24) via a projection (35) on the clamping shaft (8) and a cut-out (36) on the face side of the roller element, which the brake lever (7) via the clamping shaft (8) engages.

4. Actuating mechanism according to claim 3, characterised by the intermediate roller element (26) for the clamping shaft (8) and the second roller bearing (27, 29) with its cage (26) abutting against the projection (35) of the clamping shaft (8).

5. Actuating mechanism according to claim 1 to 4, characterised by the first roller bearing (18, 19), located between the half-cylindrical area (16) of the clamping shaft and cover (14) of the brake caliper (1), abutting (21) against the clamping shaft (8) on one side and (22) against bearing cup (19) on the other.

6. Actuating mechanism according to claims 1 to 5, characterised by the second roller bearing (27, 29), located between clamping shaft (8) and intermediate roller element (26) with cage (29), abutting against the roller element (26') on one side and against an abutment (30) of the bearing cup (28) on the other.

7. Actuating mechanism according to claims 1 to 6, characterised by a bearing (37, 38) for the thrust piece (9) which is located symmetrically around the axis of the brake (A).

8. Actuating mechanism according to claims 1 to 7, characterised by the first piece (9), in relationship to the brake caliper (1), being supported on all sides.

9. Actuating mechanism according to claim 8, characterised by the half-cylindrically machined areas (37) of the thrust piece (9) being supported in half-cylindrically guide ways (39) of the brake caliper (1).

10. Actuating mechanism according to claims 1 to 9, characterised by the position of the clamping shaft (8) in its axial direction between abutments (14") on the cover (14) and brake caliper (1).

## Revendications

1. Dispositif d'actionnement pour un frein à disque à organe d'actionnement coulissant, muni d'un corps ou d'une selle de frein (1), d'un arbre de serrage (8) relié à un levier de frein (7), cet arbre étant disposé entre l'une des faces du disque de frein (2) et le corps ou selle de frein ou bien un élément (14) relié rigidement à ce corps, l'axe de cet arbre s'étendant transversalement à l'axe du disque de frein, et cet arbre étant en appui par l'intermédiaire d'une première zone d'arbre sensiblement hémi-cylindrique (16) et d'un premier palier de roulement partiel (18, 19) sur la selle ou le corps de frein ou bien sur l'élément (14) qui lui est relié et qui est susceptible de tourner par rapport à lui par pivotement du levier de frein (7) et qui, sur sa face située du côte du disque de frein (2) et opposée à la première zone d'arbre hémi-cylindrique (16) comporte une partie en saillie, qui coopère, via un deuxième palier partiel à roulement (27, 28, 29) et un élément de roulement (26) monté en amont, avec une pièce de pressage (9) servant à l'actionnement du disque de frein (2), caractérisé
en ce que la partie en saillie (24) de l'arbre de serrage (8) est munie sur sa face tournée vers le disque de frein (2) d'un profil en développante et dont les rayons de pivotement, lorsque la course de serrage augmente, sont constants pendant chaque processus de freinage,
en ce que l'axe (B) de l'arbre de serrage (8) est monté décalé latéralement par rapport au plan médian (A) de la pièce de pressage ou de serrage (9), de telle façon que la ligne de contact de la partie en saillie (24) en forme de développante de l'arbre de serrage (8) avec les éléments de roulement (26) soit disposée en permanence dans le plan médian (A) au cours du pivotement d'aller retour de l'arbre de serrage (8),
en ce que le rayon (31) de l'élément de roulement (26) est supérieur au plus grand rayon de contact (32) du profil en développante de la partie en saillie (24)
en ce qu'entre chaque élément de roulement (26) en forme de coquille et la partie en saillie (24) de l'arbre, est prévue une liaison par ajustement de forme (33, 34, 35, 36).

2. Dispositif d'actionnement selon la revendication 1, caractérisé en ce que la liaison à ajustement de forme entre les deux parties constituées d'une part de l'élément de roulement (26) et de la partie d'arbre en saillie et an forme de développante (24) d'autre part, est réalisée par une broche (33) reliée à l'une des parties (24) et faisant saillie par rapport à cette partie, cette broche pénétrant avec jeu dans une ouverture (34) prévue dans l'autre partie (26).

3. Dispositif d'actionnement selon la revendication 1, caractérisé en ce que la liaison à ajustement de forme entre l'élément de roulement (26) et la partie en saillie de l'arbre (24), est réalisée à l'aide d'une butée en saillie (35) prévue devant l'extrémité frontale de l'élément de roulement (26) sur l'arbre de serrage (8) et d'une découpe (36) prévue à l'autre extrémité frontale de l'élément de roulement et dans laquelle s'engage le levier de frein (7) partant de l'arbre de serrage (8).

4. Dispositif d'actionnement selon la revendication 3, caractérisé en ce que l'élément de roulement (26) placé avant l'arbre de serrage (8) et la deuxième palier de roulement partiel (27, 29) intercalé avec sa cage (29) par rapport à la pièce de serrage (9), sont fixés ensemble à la butée en saillie (35) placée en avant de l'arbre de serrage (8).

5. Dispositif d'actionnement selon l'une des revendications 1 à 4, caractérisé en ce que le premier palier de roulement partiel (18, 19) inséré entre la zone d'arbre hémi-cylindrique (16) de l'arbre de serrage (8) et le couvercle (14) du corps ou de la selle de frein (1) est maintenu fermente en position d'une part à l'aide d'une butée (21) sur l'arbre de serrage (8) et d'autre part à l'aide d'une butée (22) sur la coquille de palier (19).

6. Dispositif d'actionnement selon l'une des revendications 1 à 5, caractérisé en ce que le deuxième palier de roulement partiel (27, 29) intercalé avec sa cage (29) entre l'élément de roulement (26) monté en avant de l'arbre de serrage (8) et la pièce de serrage (9), est fixé rigidement par rapport à l'élément de roulement (26) d'une part, à l'aide d'une première butée (26') prévue sur l'élément de roulement et d'autre part, à l'aide d'une butée (30) sur la coquille de palier (28).

7. Dispositif d'actionnement selon l'une des revendications 1 à 6, caractérisé par un palier de guidage (37, 38) pour la pièce de serrage (9) dans la selle ou le corps de frein (39, 40), ce palier étant disposé symétriquement autour de l'axe de frein (A).

8. Dispositif d'actionnement selon l'une des revendications 1 à 7, caractérisé en ce que la pièce de serrage (9) est en appui sur toutes ses faces sur la selle ou le corps de frein (1).

9. Dispositif d'actionnement selon la revendication 8, caractérisé en ce que la pièce de serrage (9) s'appuie dans la zone de son prolongement hémi-cylindrique (37) sur des guides sensiblement hémi-cylindriques (39) de la selle ou du corps de frein (1).

10. Dispositif d'actionnement selon l'une des revendications 1 à 9, caractérisé en ce que l'arbre de serrage (8) est positionné dans sa direction axiale entre des butées latérales (14") du couvercle (14) ou de la selle ou corps de frein (1).
